# FASCICULE DE BREVET EUROPEEN

(11) **EP 0 669 234 B1**
(45) Date de publication et mention de la délivrance du brevet: **12.11.1997**
(21) Numéro de dépôt: 95102069.2
(22) Date de dépôt: 15.02.1995
(51) Int. Cl.: B60R 25/02, E05B 17/04

(54) **Antivol de direction de véhicule automobile comportant des moyens de blocage du pêne de verrouillage**
Lenkradschloss für Kraftfahrzeuge mit Sperrvorrichtung des Riegelverschlusses
Steering lock for motor vehicles with blocking device for the locking bolt

(30) Priorité: 28.02.1994 FR 9402244
(43) Date de publication de la demande: 30.08.1995
(73) Titulaire: VALEO SECURITE HABITACLE, 94000 Créteil (FR)
(72) Inventeur: Quillard, Frédéric, F-58000 Nevers (FR); Canard, Louis, F-58000 Nevers (FR)
(74) Mandataire: Gamonal, Didier

(56) Documents cités:
- FR-A- 2 590 924
- FR-A- 2 610 882

## Description

La présente invention concerne un antivol de direction de véhicule automobile.

Selon la conception la plus répandue d'un antivol de direction de véhicule automobile, celui-ci est essentiellement constitué par un pêne de verrouillage qui est reçu dans un logement formé dans un organe rotatif de la colonne de direction, sous l'action d'un ressort de rappel et qui peut être escamoté, pour libérer la colonne de direction, par un verrou à barillet.

Toutes ces conceptions ont pour inconvénient de présenter la possibilité, pour un voleur, de repousser le pêne, à l'encontre de son ressort de verrouillage, et de permettre ainsi au voleur de libérer la colonne de direction sans avoir à agir sur le verrou.

Diverses solutions ont été proposées pour bloquer le pêne en position de verrouillage.

Une solution est décrite et représentée dans le document FR-A-2.590.924 qui est spécifique à un verrou à barillet coulissant et qui est particulièrement complexe à mettre en oeuvre dans la mesure où elle nécessite de modifier la structure même du verrou à barillet coulissant.

D'autres solutions ont été proposées qui visent à bloquer le pêne de verrouillage et à ne le libérer qu'après une rotation déterminée du barillet d'un verrou à barillet rotatif. Ces solutions sont toutefois particulièrement complexes et coûteuses à mettre en oeuvre et nécessitent également de modifier la conception classique du verrou à barillet tournant.

La présente invention a pour but de remédier aux inconvénients qui viennent d'être mentionnés.

Dans ce but, l'invention propose un antivol de direction de véhicule automobile contenant :
- un organe rotatif d'actionnement comportant une came de commande du mouvement d'escamotage d'un pêne de verrouillage, à l'encontre de l'effort de rappel exercé sur le pêne par un ressort de verrouillage, qui est susceptible de pivoter entre une position angulaire extrême de verrouillage d'un élément d'une colonne de direction dont un logement reçoit le pêne de verrouillage et une position angulaire extrême de déverrouillage dans laquelle le pêne de verrouillage est en position escamotée ;
- un rotor d'entraînement manuel en rotation de l'organe rotatif d'actionnement entre ses deux positions angulaires extrêmes ; et
- des moyens escamotables de blocage qui immobilisent en translation le pêne de verrouillage lorsque l'organe rotatif d'actionnement est dans sa position angulaire extrême de verrouillage, et dont la libération est commandée par la rotation de l'organe rotatif d'actionnement, caractérisé en ce qu'il comporte un stator dans lequel l'organe rotatif d'actionnement est monté à rotation et en ce que les moyens de blocage comportent un loquet monté basculant sur l'organe rotatif d'actionnement autour d'un pivot dont l'axe est parallèle à l'axe de rotation de l'organe rotatif d'actionnement, entre une position de blocage vers laquelle il est rappelé élastiquement et dans laquelle un bec de blocage du loquet coopère avec une surface de butée du pêne et une position de repos dans laquelle le bec de blocage est effacé en retrait par rapport à la surface de butée, le loquet de blocage comportant une surface de came de commande des mouvements de basculement du loquet qui coopère avec une surface de commande formée en vis-à-vis dans le stator.

Selon d'autres caractéristiques de l'invention :
- le bec de blocage est formé au voisinage d'une extrémité libre du loquet et il est susceptible de pénétrer dans une encoche formée dans le pêne ;
- la surface de came est une portion de surface plane inclinée formant rampe qui s'étend dans un plan parallèle à l'axe du loquet ;
- en position de repos du loquet, l'extrémité libre du bec de blocage est sollicitée élastiquement en appui contre une surface de portée cylindrique circulaire formée en vis-à-vis dans le stator ;
- le pêne de verrouillage est lié en translation à une tirette réalisée sous la forme d'une plaque montée coulissante dans le stator, parallèlement à l'axe de rotation de l'organe rotatif d'actionnement, et qui porte un doigt transversal de commande qui coopère avec la came formée sur l'organe rotatif d'actionnement ;
- l'encoche est formée dans la tirette ;
- l'antivol comporte une levier de sécurité monté pivotant sur le stator autour d'un axe perpendiculaire à l'axe de rotation de l'organe rotatif d'actionnement entre une position de repos vers laquelle il est rappelé élastiquement et une position de sécurité dans laquelle un bec de sécurité formé sur le levier de sécurité est reçu dans une lumière longitudinale formée dans le pêne pour immobiliser ce dernier en position escamotée lorsque l'organe rotatif d'actionnement est dans sa position extrême de déverrouillage, et dont le pivotement est commandé par des moyens de commande associés au rotor d'entraînement manuel ;
- le rotor d'entraînement manuel est constitué par le barillet d'un verrou rotatif dont le corps est lié en rotation au stator ;
- les moyens de commande du pivotement du levier de sécurité sont constitués par une came de sécurité qui agit sur une extrémité libre d'un bras du levier de sécurité.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective, avec des arrachements partiels, d'un exemple de réalisation d'un antivol conforme aux enseignements de l'invention et qui est illustré en position verrouillée de la colonne de direction ;
- la figure 2 est une vue en perspective éclatée des principaux composants du mécanisme de l'antivol qui sont agencés dans le boîtier de ce dernier ;
- la figure 3 est une vue schématique en perspective de certains des composants illustrés sur la figure 1 ;
- la figure 4 est une vue similaire à celle de la figure 1 sur laquelle l'antivol est illustré en position déverrouillée de la colonne de direction avec son pêne escamoté à l'intérieur du boîtier ;
- la figure 5 est une vue schématique partielle en perspective de certains des composants du mécanisme de l'antivol qui sont illustrés dans la position qu'ils occupent juste avant le blocage du pêne en position verrouillée avant l'extraction de la clef du verrou ;
- la figure 6 est une vue schématique en bout selon la flèche F6 de la figure 3 ;
- la figure 7 est une vue schématique en bout selon la flèche F7 de la figure 3 ;
- la figure 8 est une vue similaire à celle de la figure 6 qui illustre les composants dans la position qu'ils occupent lorsque l'antivol est dans sa position illustrée sur la figure 4 ; et
- la figure 9 est une vue similaire à celle de la figure 6 qui illustre les composants dans la position qu'ils occupent lorsque l'antivol est dans sa position illustrée sur la figure 5.

On a représenté sur les figures un boîtier 10 associé au boîtier de guidage en rotation de la colonne de direction (non représentée) qui est de forme générale cylindrique et dont un alésage interne 12 reçoit, fixé en rotation et en translation axiale, un stator 14.

Le stator 14 est un élément de forme générale annulaire cylindrique dont une première partie avant 16 est agencée dans l'alésage 12 et dont une seconde partie arrière 18 est agencée à l'extérieur de l'alésage 12 et du boîtier 10, ces deux parties étant séparées par un épaulement radial 20 qui définit la position axiale du stator 14 par rapport au boîtier 10.

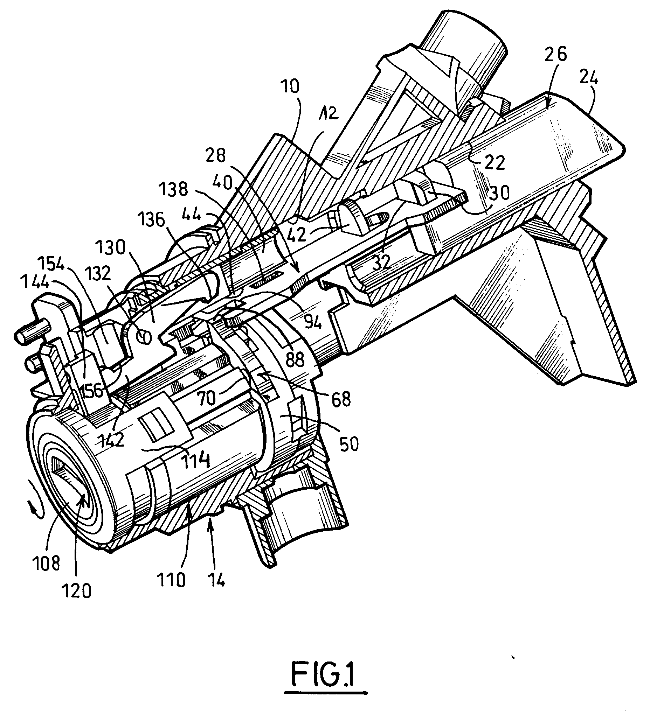

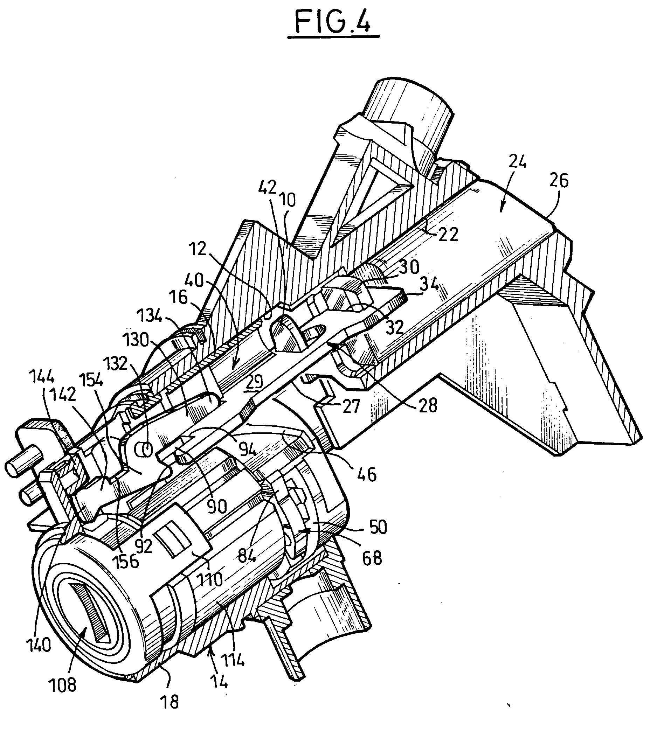

A sa partie avant, à droite en considérant les figures 1 à 5, le boîtier 10 comporte également un couloir 22 formant glissière qui reçoit en coulissement, selon une direction axiale parallèle à l'axe de l'alésage 12 et du stator 14, un pêne de verrouillage 24 qui est monté coulissant entre sa position de verrouillage illustrée sur la figure 1 dans laquelle son extrémité avant 26 fait saillie à l'extérieur du couloir 22 pour être reçue dans un logement (non représenté) de l'arbre de direction (figure 1) et une position escamotée de déverrouillage de la colonne de direction dans laquelle sa face avant 26 est en retrait et à l'intérieur du couloir 22 (figure 4).

Le pêne 24 présente une section transversale oblongue complémentaire de celle du couloir 22 afin d'éviter la rotation de cet élément autour de son axe.

Le pêne 24 est relié en translation axiale à une tirette 28 par l'intermédiaire d'une patte de liaison 30 reçue dans une boutonnière 32 formée dans la partie avant 34 de la tirette.

La tirette est reçue en coulissement dans une fente de guidage 36 formée dans la partie avant 16 du stator 14.

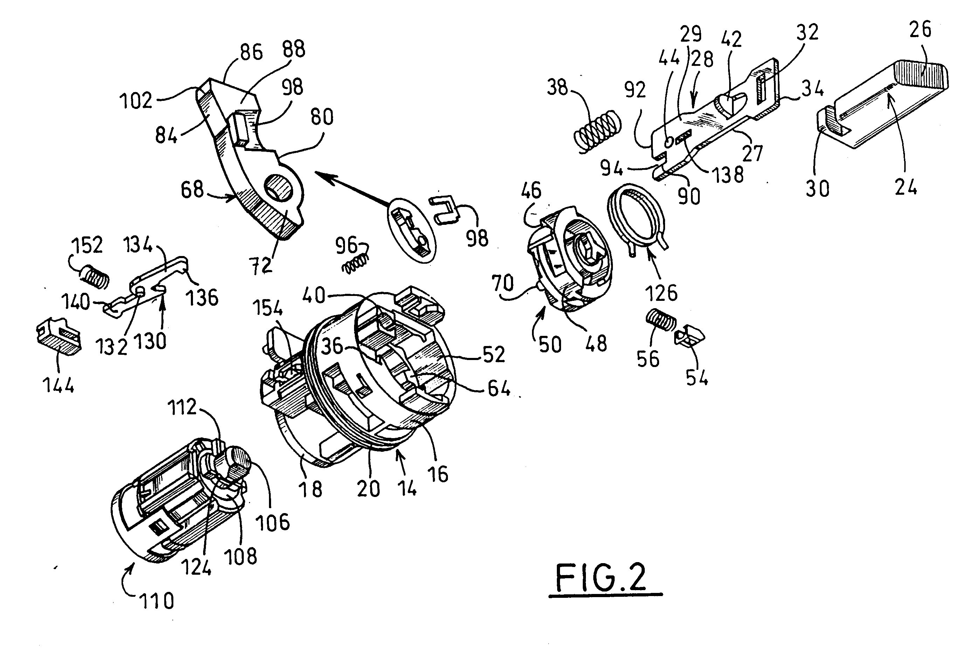

Un ressort de verrouillage 38, illustré sur la figure 2, est constitué par un ressort hélicoïdal de compression qui est prévu pour être reçu dans un logement cylindrique 40 formé dans la partie avant 16 du stator 14 pour solliciter axialement le pêne 24, vers sa position de verrouillage, illustrée sur la figure 1, en agissant sur une patte de réaction 42 formée sur la face supérieure 29 de la tirette 28.

La tirette 28 et le pêne 24 sont ainsi en permanence sollicités axialement vers l'avant en position de verrouillage de la colonne de direction.

La tirette 28 porte également un doigt ou pion 44 de commande de ses déplacements axiaux.

Le doigt de commande 44 s'étend verticalement en dessous de la face inférieure 27 de la tirette 28 pour coopérer avec la face en vis-à-vis d'une came de commande 46 qui est formée dans la paroi cylindrique extérieure 48 d'un organe rotatif d'actionnement 50.

L'organe rotatif d'actionnement 50 présente une forme générale cylindrique et il est monté à rotation dans un alésage cylindrique formé à cet effet dans la paroi de la partie avant 16 du stator 14.

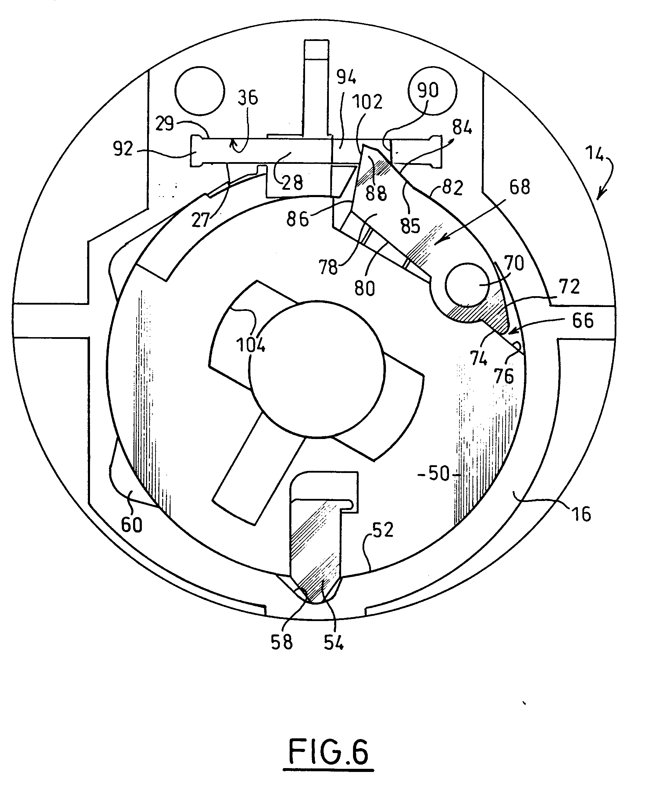

L'organe rotatif d'actionnement comporte un doigt 54 d'indexation en position angulaire de l'organe 50 par rapport au stator 14 qui est sollicité par un ressort 56 et qui peut être reçu dans deux crans 58 et 60 (figure 6) formés dans la paroi cylindrique concave 52 de l'alésage de la partie avant 16 du stator 14.

La face radiale transversale arrière 62 de l'organe rotatif d'actionnement 50 prend appui axialement contre le fond 64 de l'alésage 52 de la partie avant 16 du stator 14 et elle comporte un évidement 66 dans lequel est agencé un loquet de blocage 68.

Le loquet 68 se présente sous la forme d'un levier qui est monté pivotant dans le logement 66 autour d'un pivot 70 dont l'axe est parallèle à l'axe de rotation de l'organe 50.

Une première branche 72 du loquet 68 est une branche de butée qui limite la course de basculement du loquet 68 autour de son pivot 70, dans le sens horaire en considérant par exemple les figures 6, 8 et 9, et dont la face inférieure 74 coopère avec une surface de butée 76 en vis-à-vis du logement 66.

Le loquet de blocage 68 comporte une seconde branche 78, plus longue que la première branche 72 dont la face inférieure 80 est tournée vers le fond transversal 76 du logement 66.

La face supérieure 82 du loquet 68 comporte une rampe de commande 84 qui s'étend dans un plan parallèle à l'axe du pivot 70 et qui se prolonge, au voisinage de l'extrémité libre 86 du loquet 68, par un bec de blocage 88 qui est susceptible d'être reçu dans une encoche 90 formée dans le bord arrière libre 92 de la tirette 28.

Le fond avant 94 de l'encoche 90 constitue une surface transversale de butée de la tirette 28 contre le bec de blocage 88 lorsque ce dernier est reçu dans l'encoche 90.

Le loquet de blocage 68 est sollicité élastiquement en permanence en rotation autour de son pivot 70, dans le sens horaire en considérant la figure 6, par un ressort hélicoïdal de compression 96 qui est reçu dans un logement 98 formé dans la face inférieure 80 du loquet 68 et qui prend d'autre part appui contre une paillette en forme de U 98 qui est guidée dans une fente 100 qui s'étend dans un plan radial.

La face supérieure 102 du bec de blocage 88 est une portion de surface plane qui est susceptible de coopérer avec la face inférieure 27 de la tirette 28 comme cela sera expliqué par la suite.

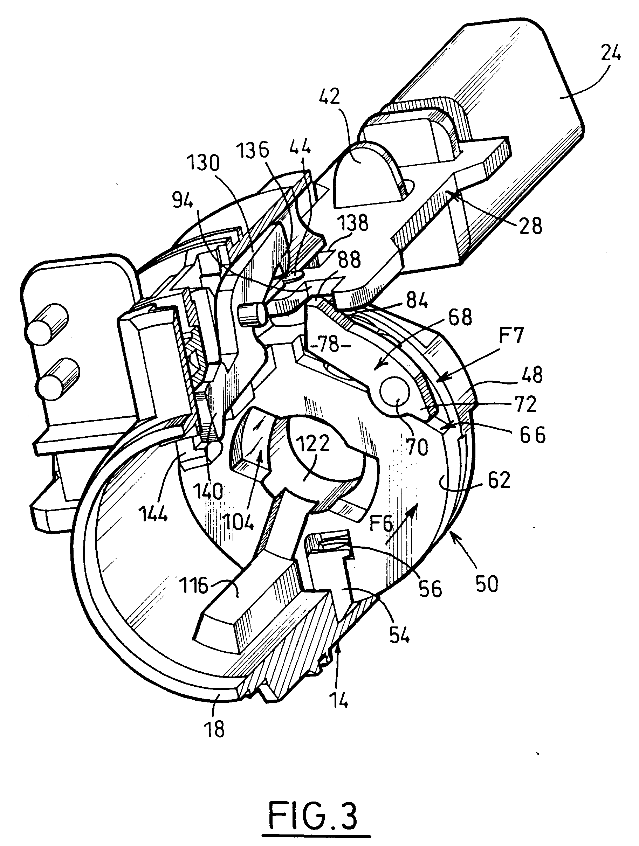

Comme on peut le voir notamment sur la figure 3, la face arrière 62 de l'organe rotatif d'actionnement 50 comporte un logement borgne en forme de T 104 qui permet l'entraînement en rotation de l'organe 50 par l'arbre de sortie 106 du barillet rotatif 108 d'un verrou 110.

A cet effet, l'arbre 106 comporte des plots d'entraînement 112 agencés en T et en relief qui sont reçus dans le logement 104.

Le corps 114 du verrou 110 est immobilisé en rotation par rapport au stator 14 dans la partie arrière 18 duquel il est reçu et qui comporte à cet effet un plot axial d'indexation angulaire 116.

Selon une conception connue, le barillet 108 comporte des logements destinés à recevoir des paillettes (non représentées) qui, en fonction de la présence ou non d'une clef dans la fente 120 du barillet 108, permettent ou non la rotation de ce dernier et donc la rotation de l'arbre de sortie 106 qui est lié en rotation à l'organe rotatif d'actionnement 50.

L'extrémité axiale de l'arbre 106 du barillet 108 qui est reçue à travers un logement cylindrique central 122 de l'organe rotatif d'actionnement 50 comporte une fente 124 qui reçoit la paillette 98, cette dernière assurant ainsi l'accrochage axial du barillet 108 sur l'organe d'entraînement 50.

On a également illustré sur la figure 2 un ressort 126 de retour à démarreur qui agit sur l'organe d'entraînement 50.

L'antivol comporte enfin un levier 130 appelé levier de sécurité.

Le levier 130 est monté pivotant dans le stator 14 autour d'un axe de pivotement 132 qui est perpendiculaire à l'axe de rotation de l'organe rotatif d'entraînement 50.

Une première branche 134 du levier 130 comporte à son extrémité libre un bec de sécurité 136 qui est prévu pour être reçu dans une lumière 138 qui est formée longitudinalement dans la tirette 28 fixée au pêne 24.

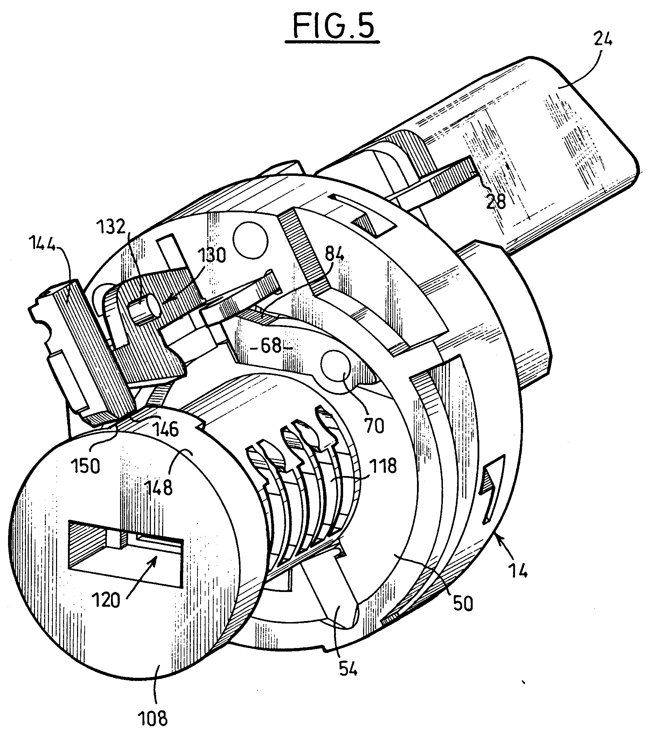

L'extrémité 140 de la seconde branche 142 du levier de sécurité 130 est reçue dans un coulisseau 144 qui est monté coulissant dans la partie arrière 18 du stator 14, selon une direction verticale perpendiculaire à l'axe de rotation de l'organe rotatif d'entraînement 50 et du barillet 108, et dont l'extrémité 146 située radialement à l'intérieur est susceptible de coopérer avec une surface de came de commande du pivotement du levier de sécurité 130 qui est formée à la périphérie du barillet 108 comme on peut le voir sur la figure 5.

La surface de came de commande comporte une partie cylindrique de plus grand diamètre 148 et une rampe 150 qui aboutit à une partie de came (non représentée sur la figure 5) cylindrique de plus petit diamètre que la partie 148.

Le levier de sécurité 130 est sollicité élastiquement en permanence en rotation autour de son axe 132 par un ressort hélicoïdal de compression 152 qui est reçu dans un logement 154 formé dans le stator et qui prend appui sur une surface d'appui 156 formée dans la face supérieure de la seconde branche 142 du levier de sécurité 130 pour solliciter ce dernier en rotation autour de son axe 132, dans le sens anti-horaire en considérant par exemple les figures 1 et 4, de manière à solliciter le coulisseau 144 en coulissement radialement vers l'intérieur en direction du barillet 108.

On décrira maintenant le fonctionnement de l'antivol.

Dans la position de verrouillage, également appelée position "stop", illustrée aux figures 1, 3 et 6, le bec de blocage 88 du loquet de blocage 68 est reçu dans l'encoche 90 et la tirette 28 ne peut donc pas être déplacée, ainsi que le pêne 24, à l'encontre du ressort de verrouillage 38, même si l'on sollicite axialement le pêne 24 à l'intérieur du couloir 22 et la colonne de direction reste donc bloquée en rotation par le pêne 24.

Si le conducteur désire procéder au déverrouillage de la colonne de direction, il introduit une clef (non représentée sur les figures) dans la fente 120 du verrou 110 ce qui a pour effet de débloquer le barillet 108 en rotation par rapport au stator 14.

Le conducteur peut alors faire tourner le barillet 108, dans le sens horaire indiqué par la flèche non référencée de la figure 1.

Cette rotation provoque l'escamotage du bec de blocage 88 du loquet de blocage 68 du fait de la coopération de la rampe 84 avec la portion de surface de commande en vis-à-vis 85 formée dans l'alésage cylindrique 52 de la partie avant 16 du stator 14, et provoque la rétraction progressive du pêne 24 et de la tirette 28 à l'intérieur du dispositif sous l'action de la coopération du doigt de commande 44 avec la came de commande 46 de l'organe d'actionnement rotatif 48.

Afin de garantir que le bec de blocage 88 est escamoté hors de l'encoche 90 préalablement au retrait complet de la tirette 28 et du pêne 24, un jeu axial est prévu entre le bec 88 et la surface de butée 94 constituée par le fond de l'encoche 90, comme cela est notamment visible sur la figure 1.

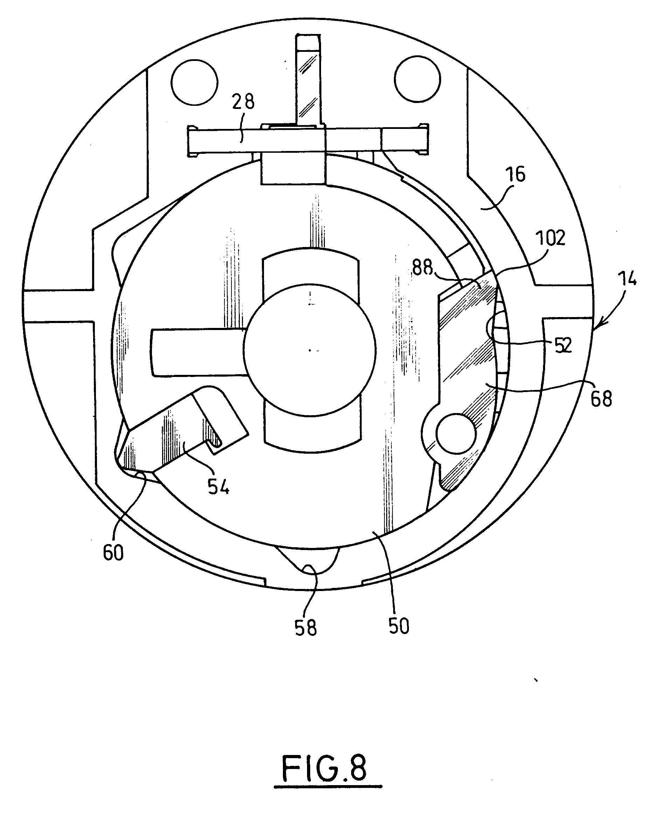

L'escamotage du pêne 24 par la tirette 28 se poursuit progressivement jusqu'à la position, dite position accessoire, illustrée aux figures 4 et 8.

Au cours de cette rotation, le doigt d'indexation de l'organe rotatif d'actionnement 50 est passé du cran 58 au cran 60 et, comme on peut le voir sur les figures 4 et 8, le loquet de blocage 68 est escamoté à l'intérieur du stator 14, 16, c'est-à-dire que la face supérieure 102 du bec de blocage 88 est en appui contre la portion de surface cylindrique en vis-à-vis 52 du stator.

A la fin de cette course angulaire de l'organe rotatif d'actionnement 50 par rapport au stator 14, dans le sens horaire en considérant les figures 6 et 8, le coulisseau 144 provoque le pivotement du levier de sécurité 130 autour de son axe 132, dans le sens horaire en considérant les figures 1 et 4, ce qui a pour effet de provoquer la pénétration du bec de sécurité 136 dans la lumière 138 qui se trouve alors en vis-à-vis du bec de sécurité 136.

Les composants sont donc alors dans la position illustrée notamment aux figures 4 et 8 dans laquelle le pêne 24 est en position escamotée en retrait dans le couloir 22, la colonne de direction est libre en rotation, et le pêne 24 est retenu par le levier de sécurité 130.

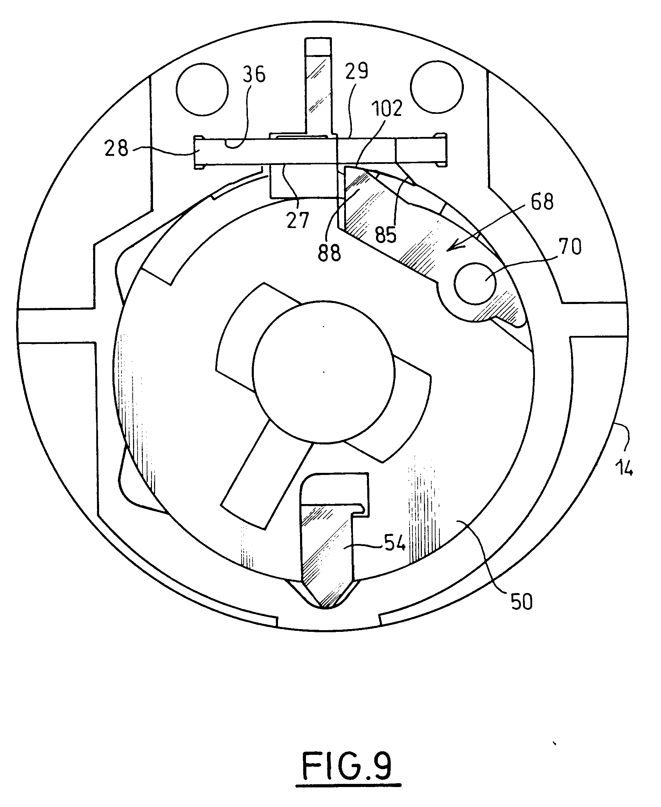

En vue d'effectuer à nouveau le blocage de la colonne de direction, le conducteur provoque une rotation dans le sens inverse, c'est-à-dire dans le sens anti-horaire en considérant la figure 8, de l'organe rotatif d'actionnement 50 pour aboutir dans un premier temps, juste avant l'extraction de la clef, à la position intermédiaire illustrée aux figures 5 et 9 dans laquelle le levier de sécurité 130 n'a pas encore libéré la tirette 28 et dans laquelle la face supérieure 102 du bec de blocage 88 du loquet de blocage 68 se trouve en appui contre la face inférieure 29 de la tirette 28.

Dès que le conducteur extrait la clef, à la fin de la course de rotation dans le sens anti-horaire du barillet 108, il provoque la libération de la tirette 28 par le levier de sécurité 130 et la sortie du pêne 24 hors du couloir 22 pour bloquer la colonne de direction en rotation.

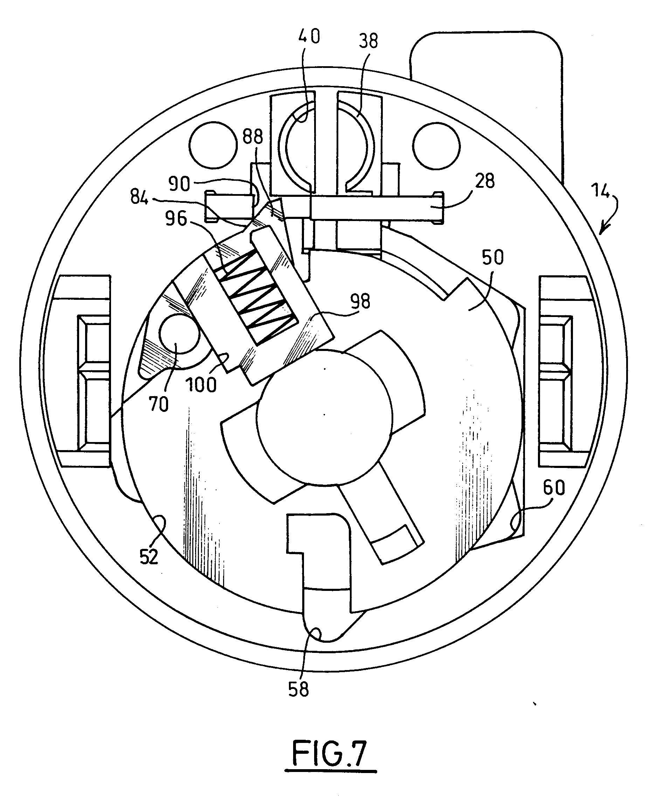

Lors de ce déplacement longitudinal de la tirette 28, l'encoche 90 vient en regard du bec de blocage 88 qui peut pénétrer à nouveau dans l'encoche 90 pour retrouver la position de blocage de la tirette 28 illustrée notamment aux figures 1, 6 et 7.

## Revendications

1. Antivol de direction de véhicule automobile, comprenant :
- un organe rotatif d'actionnement (50) comportant une came (46) de commande du mouvement d'escamotage d'un pêne de verrouillage (24), à l'encontre de l'effort de rappel exercé sur le pêne (24) par un ressort de verrouillage (38), qui est susceptible de pivoter entre une position angulaire extrême de verrouillage d'un élément d'une colonne de direction dont un logement reçoit le pêne de verrouillage (24) et une position angulaire extrême de déverrouillage dans laquelle le pêne de verrouillage (24) est en position escamotée ;
- un rotor (108) d'entraînement manuel en rotation de l'organe rotatif d'actionnement (50) entre ses deux positions angulaires extrêmes , et ;
- des moyens (68) escamotables de blocage qui immobilisent en translation le pêne de verrouillage (24, 28) lorsque l'organe rotatif d'actionnement (50) est dans sa position angulaire extrême de verrouillage, et dont la libération est commandée par la rotation de l'organe rotatif d'actionnement (50), caractérisé en ce qu'il comporte un stator (14, 16, 18) dans lequel l'organe rotatif d'actionnement (50) est monté à rotation, et en ce que les moyens de blocage comportent un loquet (68) monté basculant sur l'organe rotatif d'actionnement (50) autour d'un pivot (70) dont l'axe est parallèle à l'axe de rotation de l'organe rotatif d'actionnement (50), entre une position de blocage vers laquelle il (68) est rappelé élastiquement (96) et dans laquelle un bec de blocage (88) du loquet (68) coopère avec une surface de butée (94) du pêne (24) et une position de repos dans laquelle le bec de blocage (88) est effacé en retrait par rapport à la surface de butée (94), et en ce que le loquet de blocage (68) comporte une surface de came de commande (84) des mouvements de basculement du loquet (68) qui coopère avec une surface de commande (85) formée en vis-à-vis dans le stator (14, 16).

2. Antivol de direction selon la revendication 1, caractérisé en ce que le bec de blocage (88) est formé au voisinage d'une extrémité libre (86) du loquet (68), et en ce qu'il est susceptible de pénétrer dans une encoche (90, 94) formée dans le pêne (24, 28).

3. Antivol de direction selon la revendication 2, caractérisé en ce que la surface de came (84) est une portion de surface plane inclinée formant rampe qui s'étend dans un plan parallèle à l'axe (70) du loquet de blocage (68).

4. Antivol de direction selon l'une des revendications 2 ou 3, caractérisé en ce que, en position de repos, l'extrémité libre (102) du bec de blocage (88) est sollicitée élastiquement en appui contre une surface de portée cylindrique circulaire (52) formée en vis-à-vis dans le stator (14, 16).

5. Antivol de direction selon la revendication 4, caractérisé en ce que le pêne de verrouillage (24) est lié en translation à une tirette (28) réalisée sous la forme d'une plaque montée coulissante dans le stator (14, 16) parallèlement à l'axe de rotation de l'organe d'actionnement et qui porte un doigt transversal de commande (44) qui coopère avec la came (46) de commande formée sur l'organe rotatif d'actionnement (50).

6. Antivol de direction selon la revendication 5, caractérisé en ce que l'encoche (90) est formée dans la tirette (28).

7. Antivol de direction selon l'une quelconque des revendications précédentes, caractérisé en ce qu'il comporte un levier de sécurité (130) monté pivotant sur le stator (14, 16, 18), autour d'un axe (132) perpendiculaire à l'axe de rotation de l'organe rotatif d'actionnement (50), entre une position de repos vers laquelle il est rappelé élastiquement et une position de sécurité dans laquelle un bec de sécurité (136) formé sur le levier de sécurité est reçu dans une lumière longitudinale (138) formée dans le pêne (24, 28) pour immobiliser ce dernier en position escamotée, lorsque l'organe rotatif d'entraînement (50) est dans sa position extrême de déverrouillage, et dont le pivotement est commandé par des moyens de commande associés au rotor d'entraînement manuel (108).

8. Antivol de direction selon l'une quelconque des revendications précédentes, caractérisé en ce que le rotor d'entraînement manuel est constitué par le barillet (108) d'un verrou rotatif (110) dont le corps est lié en rotation au stator (14, 18).

9. Antivol de direction selon la revendication 8 prise en combinaison avec la revendication 7, caractérisé en ce que les moyens de commande du pivotement du levier de sécurité (130) sont constitués par une came de sécurité qui agit sur une extrémité libre (140, 144) du levier de sécurité (130).

## Claims

1. A motor vehicle steering lock, comprising:
- a rotary actuating member (50) including a cam (46) for controlling the retracting movement of a locking bolt (24), against the return force exerted on the bolt (24) by a locking spring (38), the actuating member being pivotable between an extreme angular position for locking an element of a steering column, a housing of which receives the locking bolt (24), and an extreme angular unlocking position in which the locking bolt (24) is in a retracted position;
- a rotor (108) for manually rotating the rotary actuating member (50) between its two extreme angular positions; and
- retractable blocking means (68) which immobilise the locking bolt (24, 28) against straight-line movement when the rotary actuating member (50) is in its extreme angular locking position, release of the blocking means being controlled by the rotation of the rotary actuating member (50), characterised in that it includes a stator (14, 16, 18) in which the rotary actuating member (50) is rotatably mounted, and in that the blocking means comprise a latch (68) which is mounted for tilting movement on the rotary actuating member (50) about a pivot (70), the axis of which is parallel to the axis of rotation of the rotary actuating member (50), between a blocking position towards which the blocking member (68) is urged elastically (96), and in which a blocking nose (88) of the latch (68) cooperates with an abutment surface (94) of the lock (24), and a rest position in which the blocking nose (88) is withdrawn with respect to the abutment surface (94), and in that the blocking latch (68) includes a cam surface (84) for controlling the tilting movements of the latch (68), the cam surface cooperating with a control surface (85) formed in facing relationship with it in the stator (14, 16).

2. A steering lock according to Claim 1, characterised in that the blocking nose (88) is formed close to a free end (86) of the latch (68), and in that it is adapted to penetrate into a notch (90, 94) formed in the bolt (24, 28).

3. A steering lock according to Claim 2, characterised in that the cam surface (84) is an inclined flat surface portion defining a ramp which lies in a plane parallel to the axis (70) of the blocking latch (68).

4. A steering lock according to Claim 2 or Claim 3, characterised in that, in the rest position, the free end (102) of the blocking nose (88) is urged elastically into engagement against a circular cylindrical engagement surface (52) formed in facing relationship with it in the stator (14, 16).

5. A steering lock according to Claim 4, characterised in that the locking bolt (24) is coupled in straight-line motion to a draw member (28) made in the form of a plate, which is mounted for sliding movement in the stator (14, 16) parallel to the axis of rotation of the actuating member, the draw member carrying a transverse control finger (44) which cooperates with the control cam (46) formed on the rotary actuating member (50).

6. A steering lock according to Claim 5, characterised in that the notch (90) is formed in the draw member (28).

7. A steering lock according to any one of the preceding Claims, characterised in that it includes a safety lever (130) mounted on the stator (14, 16, 18) for pivoting movement about an axis (132) at right angles to the axis of rotation of the rotary actuating member (50), between a rest position towards which it is elastically biassed, and a safety position in which a safety nose (136) formed on the safety lever is received in a longitudinal through aperture (138) formed in the lock (24, 28) for immobilising the latter in its retracted position, when the rotary actuating member (50) is in its extreme unlocking position, with pivoting movement of the safety lever being controlled by the control means associated with the manual driving rotor (108).

8. A steering lock according to any one of the preceding Claims, characterised in that the manual driving rotor is the barrel (108) of a rotary lock (110), the body of which is coupled in rotation to the stator (14, 18).

9. A steering lock according to Claim 8 taken in combination with Claim 7, characterised in that the means for controlling the pivoting movement of the safety lever (130) comprise a safety cam which acts on a free end (140, 144) of the safety lever (130).

## Patentansprüche

1. Lenkradschloß für Kraftfahrzeuge, umfassend:
- ein Drehbetätigungsorgan (50) mit einer Nocke (46) zur Betätigung der Einzugsbewegung des Verschlußriegels (24) entgegen der Rückstellkraft, die auf den Riegel (24) durch eine Verriegelungsfeder (38) ausgeübt wird, das schwenkbar zwischen einer Winkelendposition zur Verriegelung eines Elements einer Lenksäule mit einer Aufnahme, in die der Verschlußriegel (24) eingesetzt ist, und einer Freigabewinkelendposition gelagert ist, in der sich der Verschlußriegel (24) in seiner eingezogenen Position befindet;
- einen Rotor (108) für den manuellen Drehantrieb des Drehbetätigungsorgans (50) zwischen seinen beiden Winkelendpositionen; und
- einziehbare Sperrmittel (68), die den Verschlußriegel (24, 28) gegen Verschiebung sichern, wenn sich das Drehbetätigungsorgan (50) in seiner Verriegelungswinkelendposition befindet, und deren Freigabe durch die Drehung des Drehbetätigungsorgans (50) betätigt wird , **dadurch gekennzeichnet,** daß es einen Stator (14, 16, 18) umfaßt, in dem das Drehbetätigungsorgan (50) drehbar gelagert ist, und daß die Sperrmittel eine Klinke (68) umfassen, die am Drehbetätigungsorgan (50) um einen Drehzapfen (70), dessen Achse parallel zur Drehachse des Drehbetätigungsorgans (50) verläuft, kippbar zwischen einer Sperrposition, zu der sie (68) elastisch (96) zurückgestellt wird und in der eine Sperrnase (88) der Klinke (68) mit einer Anschlagfläche (94) des Riegels (24) zusammenwirkt, und einer Ruheposition gelagert ist, in der die Sperrnase (88) im Verhältnis zur Anschlagfläche (94) zurückspringend eingezogen ist, und daß die Sperrklinke (68) eine Nockenfläche (84) zur Betätigung der Kippbewegungen der Klinke (68) umfaßt, die mit einer gegenüberliegend im Stator (14, 16) ausgebildeten Betätigungsfläche (85) zusammenwirkt.

2. Lenkradschloß nach Anspruch 1, **dadurch gekennzeichnet,** daß die Sperrnase (88) in der Nähe eines freien Endes (86) der Klinke (68) ausgebildet ist und daß sie in eine im Riegel (24, 28) ausgebildete Auskerbung (90, 94) eingreifen kann.

3. Lenkradschloß nach Anspruch 2, **dadurch gekennzeichnet,** daß die Nockenfläche (84) eine als Schräge ausgebildete ebene Teilfläche ist, die sich in einer Ebene parallel zur Achse (70) der Sperrklinke (68) erstreckt.

4. Lenkradschloß nach einem der Ansprüche 2 oder 3, **dadurch gekennzeichnet,** daß in der Ruheposition das freie Ende (102) der Sperrnase (88) elastisch in Anlage an eine kreisförmige zylindrische Auflagefläche (52) beaufschlagt wird, die gegenüberliegend im Stator (14, 16) ausgebildet ist.

5. Lenkradschloß nach Anspruch 4, **dadurch gekennzeichnet,** daß der Verschlußriegel (24) verschiebungsfest mit einem Zugstück (28) verbunden ist, das in Form einer Platte ausgeführt ist, die verschiebbar im Stator (14, 16), parallel zur Drehachse des Drehbetätigungsorgans ausgeführt ist und die einen Querbetätigungsfinger (44) trägt, der mit der am Drehbetätigungsorgan (50) ausgebildeten Nocke (46) zusammenwirkt.

6. Lenkradschloß nach Anspruch 5, **dadurch gekennzeichnet,** daß die Auskerbung (90) im Zugstück (28) ausgebildet ist.

7. Lenkradschloß nach einem der vorangehenden Ansprüche , **dadurch gekennzeichnet**, daß es einen Sicherheitshebel (130) umfaßt, der am Stator (14, 16, 18) schwenkbar um eine senkrecht zur Drehachse des Drehbetätigungsorgans (50) angeordnete Achse (132) zwischen einer Ruheposition, zu der er elastisch zurückgestellt wird, und einer Sicherheitsposition gelagert ist, in der eine am Sicherheitshebel ausgebildete Sicherheitsnase (136) in einen Längsschlitz (138) eingesetzt ist, der in den Riegel (24, 28) eingearbeitet ist, um diesen in der eingezogenen Position zu sichern, wenn sich das Drehbetätigungsorgan (50) in seiner Freigabeendposition befindet, und dessen Schwenkbewegung durch Betätigungsmittel betätigt wird, die mit dem manuellen Antriebsrotor (108) verbunden sind.

8. Lenkradschloß nach einem der vorangehenden Ansprüche , **dadurch gekennzeichnet**, daß der manuelle Antriebsrotor durch den Schloßzylinder (108) eines Drehschlosses (110) gebildet wird, dessen Körper drehfest mit dem Stator (14, 18) verbunden ist.

9. Lenkradschloß nach Anspruch 8 in Kombination mit Anspruch 7 , **dadurch gekennzeichnet**, daß die Betätigungsmittel für die Schwenkbewegung des Sicherheitshebels (130) durch eine Sicherheitsnocke gebildet werden, die auf ein freies Ende (140, 144) des Sicherheitshebels (130) einwirkt.
